# EUROPÄISCHE PATENTSCHRIFT

(11) **EP 1 513 782 B1**
(45) Veröffentlichungstag und Bekanntmachung des Hinweises auf die Patenterteilung: **14.02.2007**
(21) Anmeldenummer: 03759870.3
(22) Anmeldetag: 13.06.2003
(51) Int. Cl.: C04B 37/00, C04B 35/565, C04B 35/505, B23K 1/005

(54) **VERFAHREN ZUR HERSTELLUNG VON GASDICHTEN UND HOCHTEMPERATURBESTÄNDIGEN VERBINDUNGEN VON FORMTEILEN AUS NICHTOXIDISCHER KERAMIK MITTELS LASER**
METHOD FOR PRODUCING GAS-TIGHT AND HIGH-TEMPERATURE RESISTANT UNIONS OF SHAPED PARTS, WHICH ARE MADE OF A NON-OXIDIC CERAMIC MATERIAL, BY USING A LASER
PROCEDE DE PRODUCTION DE LIAISONS ETANCHES AUX GAZ ET RESISTANTES A DES TEMPERATURES ELEVEES ENTRE DES PIECES MOULEES EN CERAMIQUE NON OXYDANTES AU MOYEN D'UN LASER

(30) Priorität: 14.06.2002 DE 10227366
(43) Veröffentlichungstag der Anmeldung: 16.03.2005
(73) Patentinhaber: Technische Universität Dresden, 01069 Dresden (DE); Management Associates GbR, 20149 Hamburg (DE)
(72) Erfinder: KNORR, Jürgen, 01328 Dresden (DE); LIPPMANN, Wolfgang, 01309 Dresden (DE); WOLF, Regine, 09599 Freiberg (DE); EXNER, Horst, 09648 Mittweida (DE); REINECKE, Anne-Maria, 09648 Mittweida (DE)
(74) Vertreter: Rauschenbach, Marion
(86) Internationale Anmeldenummer: PCT/DE2003/002056
(87) Internationale Veröffentlichungsnummer: WO 2003/106374

(56) Entgegenhaltungen:
- US-A- 5 503 703
- DATABASE WPI Section Ch, Week 198315 Derwent Publications Ltd., London, GB; Class L02, AN 1983-35527K XP002260975 -& JP 58 036985 A (DAIDO TOKUSHUKO KK), 4. März 1983 (1983-03-04)
- HESSE, A. UND HENNICKE, H.-W.: "Dünne keramische Verbundschichten zum Fügen von SiC-Hochleistungskeramiken" KERAMISCHE ZEITSCHRIFT, Bd. 46, Nr. 3, 1994, Seiten 147-150, XP009020721 in der Anmeldung erwähnt
- DATABASE WPI Section Ch, Week 198843 Derwent Publications Ltd., London, GB; Class L02, AN 1988-304859 XP002260976 -& JP 63 225584 A (NIPPEI TOYAMA KK), 20. September 1988 (1988-09-20)
- PATENT ABSTRACTS OF JAPAN vol. 1995, no. 10, 30. November 1995 (1995-11-30) -& JP 07 187836 A (TOSHIBA CERAMICS CO LTD), 25. Juli 1995 (1995-07-25)
- REINECKE, A.-M. ET AL.: "Laserstrahllöten von Siliziumkarbidkeramik für Hochtemperaturanwendungen" LASERMAGAZIN , Bd. 5, 2002, Seite 18 XP009020711

## Beschreibung

### Anwendungsgebiet der Erfindung

Die Erfindung bezieht sich auf die Gebiete der Keramik und der Lasertechnologie und betrifft ein Verfahren zur Herstellung von gasdichten und hochtemperaturbeständigen Verbindungen von Formteilen aus nichtoxidischer Keramik mittels Laser, mit dem beispielsweise niedrigschmelzende oder radioaktive Materialien in einen Behälter aus Keramik eingeschlossen werden können.

### Stand der Technik

Bekannt sind Schweiß- und Löt-Verfahren zum Fügen von Keramik und insbesondere Hochleistungskeramiken (Hesse, A. u.a., Keramische Zeitschrift 3 (1994), S. 147-150; Boretius, M. u.a., VDI-Berichte, Band 670, S. 699-713, VDI-Verlag, Düsseldorf, 1988).
Bei diesen stoffschlüssigen Fügeverfahren zeichnet sich das Löten gegenüber dem (Diffusions-)schweißen durch einen geringeren technologischen Aufwand sowie höhere Reproduzierbarkeit und Zuverlässigkeit aus.

Beim Aktivlöten mit metallischen Loten werden relativ feste Verbunde erzeugt. Beim Einsatz dieses Verfahrens an PVD-metallisierter oder laserbehandelter Keramik werden vor allem günstige Benetzungs- und Fließeigenschaften des Lotes erreicht (Wielage, B. u.a., VDI-Berichte, Band 883, S. 117-136, VDI-Verlag, Düsseldorf, 1991). Bei diesem Verfahren wird die Keramik metallisiert und anschließend in einem Ofen mit dem Lot in Kontakt gebracht. Dabei wird die Temperatur bis oberhalb der Schmelztemperatur des Lotes erhöht. Im schmelzflüssigen Zustand benetzen die Lote die metallisierte Keramikoberfläche und bilden nach Abkühlung einen festen Verbund.

Neben dem Einsatz von metallischen Loten können aber auch Glas-/Keramiklote zum Fügen von Keramik eingesetzt werden (Boretius, M. u.a., VDI-Verlag, Düsseldorf, 1995). Bei diesem Verfahren wird das Werkstück in einen Ofen eingebracht und unter Aufbringung einer äußeren Kraft zum zusammenpressen der beiden Fügepartner bis oberhalb der Schmelztemperatur des Lotes aufgeheizt. Die Kraft ist erforderlich, um einen ausreichenden Verdichtungsgrad in der Fügenaht und eine Gasdichtheit zu erreichen. Das Verfahren im Ofen findet dabei unter einer Schutzgasatmosphäre oder im Vakuum statt. Das Lot bildet nach Erreichen seiner Schmelztemperatur eine flüssige Phase, die die zu fügenden Flächen benetzt und nach Wiedererstarrung zu einem festen Keramikverbund führt. Diese Lote werden vor allem dann verwendet, wenn hohe Anforderungen in Bezug auf Korrosions- und Hochtemperaturfestigkeit, jedoch geringere Anforderungen hinsichtlich der Übertragung mechanischer Kräfte gestellt sind.
Glas-/Keramiklote benetzen Keramiken gut und können daher im Gegensatz zu metallischen Loten ohne Metallisierung der Keramikoberfläche eingesetzt werden. Ein weiterer Vorteil der Glas-Keramiklote besteht darin, dass sie gasdicht sind. Die kristallinen Glas-/Keramiklote gehen nach dem Erstarren in einen keramischen, polykristallinen Zustand über. Die Löttemperatur entspricht meist der Gebrauchstemperatur. Der besondere Vorteil von Glas-/Keramiktoten besteht darin, dass sie eine Anpassung des Ausdehnungskoeffizienten und der Temperaturstabilität der Fügestelle ermöglichen.

Nachteilig bei diesem Verfahren ist, dass die Werkstücke hinsichtlich ihrer Größe an den jeweiligen Ofen anzupassen sind, und dass im Inneren eines Keramikbehälters befindliche Stoffe, der durch Fügen verschlossen werden soll, durch die relativ lange und hohe Temperaturbelastung ebenfalls stark belastet werden. Niedrigschmelzende Stoffe sind nicht mit diesen Technologien in derartige Keramikbehälter verschließbar.

Weiterhin bekannt sind Verfahren zum Fügen von Keramiken mit Loten zu nichthochtemperaturbeständigen Keramikverbunden mittels Laser, wobei nur kleine Bauteile gefügt werden und ebenfalls ein Vakuum oder ein Schutzgas erforderlich ist. (Harrison S, u.a., Solid Freeform Fabrication Proceedings, Proc. of the SFF Symp. Austin, USA, Aug. 10-12, 1998, (1998) Seite 537-542).

### Darlegung des Wesens der Erfindung

Der Erfindung liegt die Aufgabe zugrunde eine dauerhafte, gasdichte und hochtemperaturbeständige Verbindung zwischen Bauteilen aus nichtoxidischer Keramik herzustellen.

Die Aufgabe wird durch die in den Ansprüchen angegebene Erfindung gelöst. Weiterbildungen sind Gegenstand der Unteransprüche.

Bei dem erfindungsgemäßen Verfahren zur Herstellung von gasdichten und hochtemperaturbeständigen Verbindungen von Formteilen aus nichtoxidischer Keramik mittels Laser werden Formteile aus der Keramik an den zu fügenden Flächen mit einem Lot aus 80 - 30 Ma.-% Yttriumoxid und/oder 55 - 15 Ma.-% Zirkonoxid, 5 - 70 Ma.-% Aluminiumoxid, 0 - 50 Ma.-% Siliciumdioxid und 0 - 10 Ma.-% Silicium versehen. Anschließend wird mittels eines Lasers ohne Vorhandensein einer Schutzgasatmosphäre oder eines Vakuums die Temperatur an der Fügestelle über die Schmelztemperatur des Lotes erhöht, wobei eine zur Realisierung der Verbindung hinreichenden Benetzbarkeit der zu fügenden Oberflächen durch das geschmolzene Lot mittels aus der Keramik und/oder aus dem Lot stammendem und/oder sich bildendem und/oder zusätzlich aufgebrachtem Siliciumdioxid an den zu fügenden Oberflächen realisiert wird.
Unter nichtoxidischer Keramik werden alle Keramiken verstanden, die ganz oder teilweise keine Schmelzphase(n) bilden.
Ein Reduktionsmittel kann ebenfalls über die Keramik oder über das Lot an die Fügestelle gebracht werden.
Die Fügeflächen sind diejenigen Flächen der zu verbindenden Teile, die nach dem Herstellen der Verbindung den örtlichen Zusammenhalt der zu verbindenden Teile realisieren.
Unter Fügestellen soll im Rahmen dieser Erfindung das Volumen verstanden werden, das das aufzuschmelzende Lot und mindestens die angrenzenden Fügeflächen umfasst. Regelmäßig umfasst dieses Volumen auch noch die an die Fügeflächen angrenzenden Keramikteile.

Das Siliciumdioxid an der Fügestelle dient einerseits zur Absenkung der Schmelztemperatur des Lotes während der Temperaturerhöhung und anderseits zur Realisierung der benötigten Benetzbarkeit der Fügeflächen durch das geschmolzene Lot.
Der Siliciumdioxidanteil kann aus der Keramik und/oder aus dem Lot stammen und/oder sich bilden und/oder zusätzlich aufgebracht sein.
Im Falle des Einsatzes von Siliciumcarbidkeramik ist herstellungsbedingt auf der Oberfläche der Siliciumcarbidkömer eine Siliciumdioxidschicht vorhanden, die an der Fügefläche für die Herstellung einer ausreichenden Benetzbarkeit durch das geschmolzene Lot in vielen Fällen ausreichend ist. Weiterhin diffundiert aus dem um die Fügeflächen umliegenden Keramikvolumen in Abhängigkeit von der Zeit der Temperatureinwirkung Siliciumdioxid an die Fügeflächen, so dass eine ausreichende Menge an Siliciumdioxid für die Herstellung einer ausreichenden Benetzbarkeit durch das geschmolzene Lot an den Fügeflächen vorhanden ist.
Weiterhin kann sich Siliciumdioxid durch Oxidation des prinzipiell abdampfenden SiO mit dem Luftsauerstoff bilden und an der Oberfläche der Bauteile und insbesondere auf der Oberfläche der Fügeflächen niederschlagen.
Allgemein, aber insbesondere im Falle der Herstellung einer Verbindung von anderer nichtoxidischer Keramik kann auf die Fügeflächen auch Siliciumdioxid aufgebracht werden, um die notwendige Menge an Siliciumdioxid zur Herstellung einer ausreichenden Benetzbarkeit durch das geschmolzene Lot zur realisieren.
Anschließend wird mittels eines Lasers die Temperatur an der Fügestelle bis oberhalb der Schmelztemperatur des Lotes erhöht, wobei auf eine Schutzgasatmosphäre oder ein Vakuum verzichtet wird.

Es ist vorteilhaft, wenn ein Lot aus 80 - 30 Ma.-% Yttriumoxid und/oder Zirkonoxid, 20 - 70 Ma.-% Aluminiumoxid, 0 - 40 Ma.-% Siliciumdioxid und 0 -10 Ma.-% Silicium eingesetzt wird.

Vorteilhaft ist auch, wenn ein Lot aus 50 - 20 Ma.-% Zirkonoxid, 20 - 70 Ma.-% Aluminiumoxid, 1 - 5 Ma.-% Siliciumdioxid und 1 - 5 Ma.-% Silicium eingesetzt wird.

Vorteilhafterweise wird ein Lot aus 60 - 80 Ma.-% Yttriumoxid, 20 - 40 Ma.-% Aluminiumoxid, 1 - 5 Ma.-% Siliciumdioxid und 1 - 5 Ma.-% Silicium eingesetzt.

Ebenfalls vorteilhafterweise wird das Lot in fester oder pulverförmiger oder streifenförmiger oder pastöser Form oder als Beschichtung eingesetzt.

Es ist weiterhin von Vorteil, wenn als Laser ein Nd:YAG-Laser eingesetzt wird.

Es ist auch vorteilhaft, wenn die Fügestellen auf Temperaturen von 1200 °C bis 2000 °C aufgeheizt werden.

Noch vorteilhafter ist es, wenn die Fügestellen auf Temperaturen von 1500 °C bis 1900 °C aufgeheizt werden.

Ebenfalls ist es vorteilhaft, wenn als Keramik Siliciumcarbidkeramik gefügt wird.

Der besondere Vorteil der Erfindung liegt darin, dass es erstmals möglich ist, insbesondere Siliciumcarbidkeramikformteile zu fügen, wobei ausdrücklich keine Schutzgasatmosphäre oder ein Vakuum vorliegen dürfen.
Unter Schutzgasatmosphäre wird dabei eine Atmosphäre zur Vermeidung von Oxidationsprozessen in der Regel durch Inertgas verstanden.
Der so während des Fügens vorliegende O₂-Partialgegendruck verschiebt das Phasengleichgewicht in der Fügezone derart, dass die Gasbildung während des Fügens reduziert wird und eine optimale Fügenaht entsteht.
Weiterhin besteht ein Vorteil der Erfindung darin, dass Laser jeglicher Art und Wellenlänge einsetzbar sind. Besonders vorteilhaft können Laser eingesetzt werden, wenn deren Strahlfokus nicht auf der Oberfläche des Lotes an der Fügestelle liegt, sondernhöher, so dass eine gleichmäßigere Temperaturausbreitung im Lot erreicht wird.

Bei dem erfindungsgemäßen Verfahren wird auf die Werkstücke, die aus einer nichtoxidischen Keramik bestehen, die ganz oder teilweise keine Schmelzphasen bildet, in dem ersten Verfahrensschritt das Lot auf die Fügestelle aufgebracht.
Dabei kann das Lot als pulverförmiger Stoff oder als Paste oder als Suspension aufgebracht werden. Nach dem Trocknen verbleibt das Lot auf der Fügestelle.

Das Aufbringen kann beispielsweise durch Aufspritzen, mit einem Rakel, mit einem Stempel oder mit einer Faser erfolgen.
Es ist auch möglich, das Lot in eine Vertiefung oder eine Nut an der Fügestelle zu positionieren.
Durch derartige Verfahren wird ein gezielter und mengenmäßig regelbarer Auftrag des Lotes auf der Fügestelle gesichert. Gleichzeitig wird dadurch das Verfahren gut mechanisier- und automatisierbar.
Im anschließenden Verfahrensschritt wird ein Bereich auf den oder um die Fügestelle herum mit der Laserstrahlung eines CO₂-Lasers oder Nd:YAG- Lasers oder eines Diodenlasers erwärmt. Dazu wird der Laserstrahl auf die Oberflächen der Werkstücke gerichtet und die Erwärmung der Fügenaht oder Bereiche um die Fügenaht vorteilhafterweise durch eine Relativbewegung zwischen Laserstrahl und Werkstücken durch beispielsweise das Bewegen der Werkstücke gegenüber einem fest positionierten Laserstrahl oder dem Ablenken der Laserstrahlung mit Hilfe von optischen Aufbauten gegenüber festen Werkstücken oder Kombinationen beider Verfahren erreicht. Gleichzeitig wird durch ein Strahlungspyrometer oder einer ähnlichen Temperaturmesseinrichtung die Oberflächentemperatur gemessen. Über eine temperaturabhängige Laserleistungssteuerung werden eine definierte Temperatur im Bereich der Schmelztemperatur der zur Verbindungsbildung dienenden Stoffe, sowie definierte Aufheiz- und Abkühlzyklen erreicht.
Die Oberflächen der Werkstücke sind dabei sowohl vollständig als auch abschnittsweise (in unmittelbarer Nähe der Fügeflächen) oder nacheinander erwärmbar.
Wird nur der Abschnitt in unmittelbarer Nähe der Fügefläche erwärmt, können andere Abschnitte der Werkstücke gekühlt werden. Dadurch ist es möglich, Werkstücke zu fügen, die gleichzeitig mit niedrig schmelzenden Materialien in Kontakt sind, ohne dass diese niedrig schmelzenden Materialien schmelzen.
Nach dem Erreichen einer Temperatur im Bereich der Schmelztemperatur der zur Verbindungsbildung dienenden Stoffe durch einen Nd:YAG- Laser oder einen CO₂-Laser oder einen Diodenlaser tritt die Verbindungsbildung ein. Bester Weg zur Ausführung der Erfindung

Im Weiteren wird die Erfindung an einem Ausführungsbeispiel näher erläutert.

Ein unten verschlossener hohlzylinderförmiger Siliciumcarbidkeramikkörper mit den Abmessungen: Durchmesser = 15 mm und Höhe = 50mm wird mittels des erfindungsgemäßen Verfahrens mit einem Deckel versehen. Der Keramikbehälter ist dabei mit einem radioaktiven Material gefüllt.
Auf die oberen Querschnittsflächen des Keramikkörpers wird ein Lot aus 61,75 Ma.-% Y₂O₃, 33,25 Ma.-% Al₂O₃ und 5 Ma.-% SiO₂ in pastöser Form aufgestrichen. Danach wird der Deckel aus Siliciumcarbidkeramik aufgesetzt. Nun wird der Laserstrahl eines Nd:YAG-Lasers mit einer Leistung von 500 W auf die Fügenaht gerichtet. Dabei entsteht an der Fügenaht eine Temperatur von 1600 °C. Der Keramikkörper wird während der Laserbearbeitung mit einer Geschwindigkeit von 167 Umdrehungen/min gedreht. Nach mehrfachem Umlauf während 30 s des Keramikkörpers ist der Deckel fest mit dem Keramikkörper verbunden.
Das radioaktive Material ist dauerhaft und gasdicht in dem Keramikkörper eingeschlossen.

## Patentansprüche

1. Verfahren zur Herstellung von gasdichten und hochtemperaturbeständigen Verbindungen von Formteilen aus nichtoxidischer Keramik mittels Laser, bei dem Formteile aus der Keramik an den zu fügenden Flächen mit einem Lot aus 80 - 30 Ma.-% Yttriumoxid und/oder 55 - 15 Ma.-% Zirkonoxid, 5 - 70 Ma.-% Aluminiumoxid, 0 - 50 Ma.-% Siliciumdioxid und 0 - 10 Ma.-% Silicium versehen wird, und anschließend mittels eines Lasers ohne Vorhandensein einer Schutzgasatmosphäre oder eines Vakuums die Temperatur an der Fügestelle über die Schmelztemperatur des Lotes erhöht wird, wobei eine zur Realisierung der Verbindung hinreichenden Benetzbarkeit der zu fügenden Oberflächen durch das geschmolzene Lot mittels aus der Keramik und/oder aus dem Lot stammendem und/oder sich bildendem und/oder zusätzlich aufgebrachtem Siliciumdioxid an den zu fügenden Oberflächen realisiert wird.

2. Verfahren nach Anspruch 1, bei dem ein Lot aus 80 - 30 Ma.-% Yttriumoxid und/oder Zirkonoxid, 20 - 70 Ma.-% Aluminiumoxid, 0 - 40 Ma.-% Siliciumdioxid und 0-10 Ma.-% Silicium eingesetzt wird.

3. Verfahren nach Anspruch 1, bei dem ein Lot aus 50 - 20 Ma.-% Zirkonoxid, 20 - 70 Ma.-% Aluminiumoxid, 1 - 5 Ma.-% Siliciumdioxid und 1 - 5 Ma.-% Silicium eingesetzt wird.

4. Verfahren nach Anspruch 1, bei dem ein Lot aus 60 - 80 Ma.-% Yttriumoxid, 20 - 40 Ma.-% Aluminiumoxid, 1 - 5 Ma.-% Siliciumdioxid und 1-5 Ma.-% Silicium eingesetzt wird.

5. Verfahren nach Anspruch 1, bei dem das Lot in fester oder pulverförmiger oder streifenförmiger oder pastöser Form oder als Beschichtung eingesetzt wird.

6. Verfahren nach Anspruch 1, bei dem als Laser ein Nd:YAG-Laser eingesetzt wird.

7. Verfahren nach Anspruch 1, bei dem die Fügestellen auf Temperaturen von 1200 °C bis 2000 °C aufgeheizt werden.

8. Verfahren nach Anspruch 1, bei dem die Fügestellen auf Temperaturen von 1500 °C bis 1900 °C aufgeheizt werden.

9. Verfahren nach Anspruch 1, bei dem als Keramik Siliciumcarbidkeramik verbunden wird.

## Claims

1. A method for producing gastight and high-temperature resistant connection of shaped parts, the parts made of a non-oxidic ceramic, by a laser, comprising:
providing solder at a joint area at surfaces of the shaped parts to be jointed, the solder comprising at least one of 80 - 30 % by weight yttrium oxide and 55 - 15 % by weight zirconium oxide, 5 - 70 % by weight aluminum oxide, 0- 50 % by weight silicon dioxide and 0 - 10 % by weight silicon, and having a melting temperature;
subsequently raising a temperature at the joint area above the melting temperature of the solder by a laser, without presence of a protective gas atmosphere or a vacuum, so that a wettability sufficient for realizing connection of the surfaces to be joined is realized at the surfaces to be joined by the melted solder by silicon dioxide that at least one of originates from the ceramic, originates from the solder, is formed and is additionally applied.

2. The method according to claim 1, wherein the solder comprises at least one of 80 - 30 % by weight yttrium oxide and zirconium oxide, 20 - 70 % by weight aluminum oxide, 0 - 40 % by weight silicon dioxide and 0 - 10 % by weight silicon.

3. The method according to claim 1, wherein the solder comprises 50 - 20% by weight zirconium oxide, 20 - 70% by weight aluminum oxide, 1 - 5 % by weight silicon dioxide and 1 - 5% by weight silicon.

4. The method according to claim 1, wherein the solder comprises 60 - 80% by weight yttrium oxide, 20 - 40% by weight aluminum oxide, 1 - 5% by weight silicon dioxide and 1 - 5% by weight silicon.

5. The method according to claim 1, wherein the solder is provided at the joint area in solid form, powdery form, strip form, pasty form or as a coating.

6. The method according to claim 1, wherein the laser is Nd:YAG laser.

7. The method according to claim 1, in which the temperature of the joint area is raised to a temperature of 1200 °C to 2000 °C.

8. The method according to claim 1, wherein the temperature of the joint area is raised to a temperature of 1500 °C to 1900 °C.

9. The method according to claim 1, wherein the ceramic that is joined comprises silicon carbide ceramic.

## Revendications

1. Procédé de réalisation au moyen d'un laser de jonctions étanches au gaz et réfractaires pour des pièces façonnées en céramique non oxydées, dans lequel les pièces façonnées en céramique sont dotées sur leur surface de jonction d'une soudure constituée de 80 à 30 % en masse d'oxyde d'yttrium et/ou de 55 à 15 % en masse d'oxyde de zirconium, de 5 à 70 % en masse d'oxyde d'aluminium, de 0 à 50 % en masse de dioxyde de silicium et de 0 à 10 % en masse de silicium, et dans lequel au moyen d'un laser et sans présence d'une atmosphère de gaz de protection ou d'un vide, la température est ensuite augmentée à l'emplacement de jonction au-delà de la température de fusion de la soudure, une mouillabilité des surfaces à rejoindre, suffisante pour réaliser la liaison, étant obtenue sur les surfaces à rejoindre par la soudure fondue, au moyen de dioxyde de silicium qui se forme à partir de la céramique et/ou de la soudure et/ou qui est appliqué en supplément.

2. Procédé selon la revendication 1, qui utilise une soudure constituée de 80 à 30 % en masse d'oxyde d'yttrium et/ou d'oxyde de zirconium, de 20 à 70 % en masse d'oxyde d'aluminium, de 0 à 40 % en masse de dioxyde de silicium et de 0 à 10 % en masse de silicium.

3. Procédé selon la revendication 1, qui utilise une soudure constituée de 50 à 20 % en masse d'oxyde de zirconium, de 20 à 70 % en masse d'oxyde d'aluminium, de 1 à 5 % en masse de dioxyde de silicium et de 1 à 5 % en masse de silicium.

4. Procédé selon la revendication 1, qui utilise une soudure constituée de 60 à 80 % en masse d'oxyde d'yttrium, de 20 à 40 % en masse d'oxyde d'aluminium, de 1 à 5 % en masse de dioxyde de silicium et de 1 à 5 % en masse de silicium.

5. Procédé selon la revendication 1, dans lequel la soudure est utilisée sous forme solide ou poudreuse, en forme de ruban, sous forme pâteuse ou sous la forme d'un revêtement.

6. Procédé selon la revendication 1, qui utilise comme laser un laser Nd:YAG.

7. Procédé selon la revendication 1, dans lequel les emplacements de jonction sont chauffés à des températures comprises entre 1 200°C et 2 000°C.

8. Procédé selon la revendication 1, dans lequel les emplacements de jonction sont chauffés à des températures comprises entre 1 500°C et 1 900°C.

9. Procédé selon la revendication 1, dans lequel on relie comme céramique une céramique de carbure de silicium.
